(19) Europäisches Patentamt

European Patent Office

Office européen des brevets

(11) Numéro de publication : **0 336 790 B1**

(12) **FASCICULE DE BREVET EUROPEEN**

(45) Date de publication du fascicule du brevet :
**07.10.92 Bulletin 92/41**

(21) Numéro de dépôt : **89400611.3**

(22) Date de dépôt : **03.03.89**

(51) Int. Cl.⁵ : **G01G 11/00,** G01G 11/04,
B65G 49/00

(54) **Dispositif pour assurer le transport et le calibrage pondéral d'objets fragiles.**

(30) Priorité : **08.04.88 FR 8804703**

(43) Date de publication de la demande :
**11.10.89 Bulletin 89/41**

(45) Mention de la délivrance du brevet :
**07.10.92 Bulletin 92/41**

(84) Etats contractants désignés :
**AT BE CH DE ES FR GB GR IT LI LU NL SE**

(56) Documents cités :
**GB-A- 2 171 527**
**US-A- 4 660 665**

(73) Titulaire : **M.A.F.(MATERIEL POUR
L'ARBORICULTURE FRUITIERE) S.A.
546 Rue Gustave-Jay
F-82001 Montauban Cédex (FR)**

(72) Inventeur : **Blanc, Philippe
33 Avenue Gambetta
F-82000 Montauban (FR)**

(74) Mandataire : **Armengaud Ainé, Alain
Cabinet ARMENGAUD AINE 3 Avenue
Bugeaud
F-75116 Paris (FR)**

## Description

La présente invention est relative à un dispositif pour assurer le transport et le calibrage pondéral d'objets fragiles tels que notamment des fruits et des légumes.

On connaît (FR.A-2 580 393) des dispositifs de transport et de calibrage pondéral d'objets fragiles, tels que notamment des fruits et légumes, qui comprennent un convoyeur à déplacement continu entraînant des réceptacles, en forme de plateaux ou de coupelles, recevant chacun l'un des objets à peser, pour les amener sur la plaque de pesage d'un mécanisme de pesée où ils sont pesés individuellement, avant d'être évacués vers les installations de conditionnement.

Ces installations donnent généralement satisfaction. Elles présentent cependant deux inconvénients majeurs :

– les receptacles en forme de plateaux ou de coupelles sont nécessairement réalisés en matériau rigide non déformables et les heurts que peuvent subir les fruits et autres objets fragiles ainsi transportés peuvent endommager ces derniers, et nuire à leur qualité, ce qui oblige à un tri soigneux pour éliminer les fruits endommagés,

– la structure même des réceptacles recevant les objets à peser nécessite l'utilisation de moyens particuliers, notamment pour tenir compte de la position du centre de gravité de l'ensemble réceptacle + objet qu'il contient.

La présente invention se propose d'apporter un système original éliminant les inconvénients mentionnés ci-dessus.

En conséquence, l'invention concerne un dispositif pour assurer le transport et le calibrage pondéral d'objets fragiles, tels que notamment des fruits et des légumes, du type comportant un transporteur continu déplaçant les objets à peser positionnés individuellement sur un réceptacle, afin de les amener un par un sur la plaque de pesage d'un système de pesée avant des les évacuer vers des installations de conditionnement, caractérisé en ce que lesdits receptacles sont constitués par une nappe de banderoles, constituées d'un matériau présentant d'une part une bonne résistance à la traction, et d'autre part, une faible résistance à la déformation en flexion, chaque banderole, munie dans sa partie avant d'un organe de traction et dans sa partie arrière d'un bourrelet pour maintenir l'objet à peser, étant tractée sur un support formant un plan incliné qui est interrompu dans la zone où est positionnée ladite plaque de pesage. Selon l'invention, le matériau utilisé pour réaliser les banderoles doit être facilement déformable de façon à épouser, au mieux, les formes du support sur lequel progressent lesdites banderoles. Par ailleurs, ce matériau doit être rigide en traction afin que soit conservée la géométrie des banderoles, et éviter les effets oscillatoires lors de la traction des banderoles sur le plan de pesage.

De préférence, on utilisera une toile ou le matériau employé pour réaliser les bandes transporteuses minces.

Selon une autre caractéristique de cette invention, l'évacuation des objets après leur pesée est réalisée à l'aide de trappes à commande pneumatique de préférence, placées sur le trajet des banderoles, celles-ci, par basculement autour de leurs moyens de traction, liberant les objets pesés, qui après leur passage au travers de l'ouverture desdites trappes sont répartis par lots vers les différentes sorties pour être délivrées aux installations de conditionnement. De préférence, l'ensemble est géré par une unité d'automatisme qui analyse le signal électrique émis par les capteurs du système de pesée et qui établit un registre à décalage des ordres d'ouverture des trappes en fonction de l'avancement du système.

D'autres caractéristiques et avantages de cette invention ressortiront de la decscription faîte ci-après en référence au dessin annexé qui en illustre un exemple de réalisation dépourvu de tout caractère limitatif. Sur le dessin :

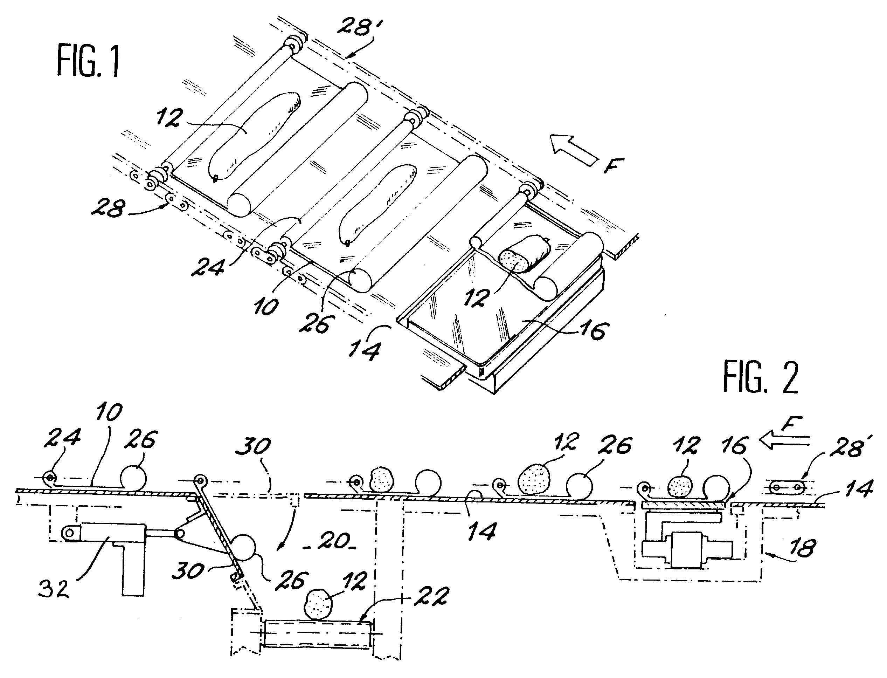

– la figure 1 est une vue en perspective du dispositif de transport selon l'invention avec ses banderoles, et

– la figure 2 est une vue en élévation latérale du dispositif objet de cette invention.

Comme on le voit sur le dessin, le dispositif selon l'invention comporte une pluralité de banderoles telles que 10, constituant une nappe continue, qui se déplacent sur un support plan 14, légèrement incline. Chaque banderole 10 comporte dans sa partie avant (en considérant le sens de déplacement de la nappe de banderoles indiqué par la flèche F), un organe de traction, constitue ici par une tringle 24, fixée à chacune de ses extrémités sur un maillon de chaînes sans fin 28, 28', respectivement et, en partie arrière, un bourrelet 26 de manière à assurer le positionnement et le maintien des objets 12 transportés en vue de leur calibrage pondéral. Ce dernier s'effectue à l'aide d'une installation classique de pesée, désignée dans son ensemble par la référence 18, de type à jauges de contrainte, la pesée étant effectuée en continu, lorsque chaque banderole 10 portant l'objet à peser 12 passe sur la plaque de pesage 16. Comme on le voit sur le dessin, le support plan 14, le long duquel est tractée la nappe de banderole 10, est interrompu dans la zone où est positionnée la plaque 16.

Comme on l'a précisé ci-dessus, les banderoles sont confectionnées dans des materiaux facilement déformables et épousant au mieux les formes du support 14 sur lequel elles progressent. Le matériau doit donc offrir une faible résistance à la déformation en flexion tout en presentant une bonne résistance en traction. On utilisera de préférence une toile ou un matériau utilisé pour confectionner une bande transporteuse mince.

Le dispositif comporte par ailleurs un système d'évacuation des objets pesés. Ce système comprend au moins une trappe 30 actionnée de préférence par un vérin pneumatique 32, qui fait basculer la banderole portant l'objet pesé, quand celle-ci passe sur la trappe de manière à délivrer l'objet pesé au travers de la sortie 20 sur un tapis d'évacuation 22 vers des installations de conditionnement classiques (non représentées). Bien entendu, on peut prévoir plusieurs trappes à commandes pneumatiques telles que 30 pour assurer l'éjection des objets pesés en fonction des désirs de répartition des lots vers différentes sorties. L'ensemble du dispositif est géré par une unité d'automatisme qui reçoit et analyse le signal électrique des capteurs de force du système de pesée 18 qui établit un registre à décalage des ordres d'ouverture des trappes telles que 20 en fonction de l'avancement des banderoles portant chacune un objet de pesée.

Il est nécessaire que la partie supérieure de la plaque de pesage 16 se confonde le plus possible avec l'axe de traction défini par le profil de la banderole afin d'éviter l'apparition d'efforts parasites de levitation de la charge constituée par les objets 12 à peser, qui en augmentant, engendrerait une prise en compte de la masse desdits objets plus faible que la réalité. Il faut également que l'effort de traction soit le plus faible possible lorsque la banderole portant l'objet a peser passe sur la plaque de pesage 16. Pour résoudre ce problème, l'invention prévoit de disposer un revêtement de polytetrafluoréthylène ("Teflon") sur la plaque de pesage 16, ou tout autre matériau présentant un faible coefficient de frottement ou d'adhérence, ou un système à coussin d'air implanté sur la plaque 16. Le fonctionnement du dispositif objet de l'invention apparaît clairement à l'examen du dessin.

Chaque objet à peser, ici une banane 12, positionné individuellement sur une banderole 10, est maintenu sur cette dernière, durant son déplacement continu, par le bourrelet 26. La nappe de banderoles entraînée en translation continue par les chaînes sans fin 28, 28′ le long du plan de support 14 légèrement incliné, amène chaque fruit 12 sur la plaque de pesage 16 où la prise en compte de la masse ainsi transportée par chaque banderole est assurée par le système de pesée classique 18 a jauges de contrainte supportant la plaque 16. Après la pesee, l'éjection des fruits est assurée par les trappes pneumatiques 30 sur lesquelles basculent les banderoles pour libérer les fruits pesés, ceux-ci étant acheminés vers différentes sorties en tenant compte des désirs de repartition du lot grâce à l'unité d'automatisme mentionnée ci-dessus.

Il demeure bien entendu que cette invention n'est pas limitée à l'exemple de réalisation décrit ici.

## Revendications

1 - Dispositif pour assurer le transport et le calibrage pondéral d'objets fragiles, tels que notamment des fruits et des légumes, du type comportant un transporteur continu (14,28) déplaçant les objets à peser positionnés individuellement sur un réceptacle (10), afin de les amener un par un sur une plaque (16) de pesage d'un système de pesée (18) avant de les évacuer (30) vers des installations de conditionnement, caractérisé en ce que lesdits réceptacles sont constitués par une nappe de banderoles (10) constituées d'un matériau présentant d'une part une bonne résistance à la traction, et d'autre part, une faible résistance à la déformation en flexion, chaque banderole (10) munie dans sa partie avant d'un organe de traction (24) et dans sa partie arrière d'un bourrelet (26) pour maintenir l'objet à peser (12) étant tractée sur un support formant un plan incline qui est interrompu dans la zone où est positionnée ladite plaque de pesage (16) ;

2 - Dispositif selon la revendication 1, caractérisé en ce que lesdites banderoles (10) sont réalisées en toile.

3 - Dispositif selon la revendication 1 caractérisé en ce que lesdites banderoles (10) sont réalisées en un matériau utilisé pour confectionner des bandes transporteuses minces.

4 - Dispositif selon l'une quelconque des revendications précédentes, caractérisé en ce que les organes de traction sont constitués par des tringles (24) qui sont fixées sur des chaînes (28, 28′) assurant leur entrainement en continu.

5 - Dispositif selon l'une quelconque des revendications précédentes, caracterise en ce que l'évacuation des objets pesés est réalisée à l'aide de trappes pneumatiques (30) placées sur le trajet des banderoles, après l'installation de pesée (18) de manière a répartir par lots les objets pesés, vers les différentes sorties.

6 - Dispositif selon l'une quelconque des revendications précédentes, caractérisé en ce qu'il comporte une unité d'automatisme qui reçoit et analyse le signal électrique émis par les capteurs de force du systeme de pesée (18) et qui établit un registre à décalage des ordres d'ouverture des trappes (30) en fonction de l'avancement de la nappe de banderoles.

7 - Dispositif selon l'une quelconque des revendications précédentes, caractérisé en ce que la surface supérieure de la plaque de pesage (18) se confond avec le plan selon lequel se déplace la nappe de banderoles (10).

8 - Dispositif selon l'une quelconque des revendications précédentes, caractérisé en ce que la plaque de pesage (18) est garnie d'un matériau antifriction tel que le polytétrafluoréthylène.

9 - Dispositif selon l'une quelconque des revendications précédentes, caractérisé en ce que la plaque de pesage (18) est munie d'un système engendrant un coussin d'air sur lequel repose l'objet à peser.

**Patentansprüche**

1. Vorrichtung zum Transport und zur Gewichtseichung von zerbrechlichen Gegenständen, wie insbesondere Obst und Gemüse, mit einem kontinuierlichen Transportmittel (14,28), das die zu wiegenden, einzeln auf einer Aufnahmestelle (10) positionierten Gegenstände verschiebt, um sie einen nach dem anderen auf eine Wiegeplatte (16) eines Wiegesystems (18) zu leiten, bevor sie in die Behandlungsvorrichtungen entleert (30) werden,
   dadurch **gekennzeichnet**,
   daß die Aufnahmestellen aus einer Folge von Banderolen (10) gebildet sind, die aus einem Material bestehen, das einerseits eine hohe Reißfestigkeit und andererseits einen niedrigen Widerstand gegen Biegedeformation aufweist, wobei jede der in ihrem Vorderteil mit einem Zugorgan (24) und in ihrem hinteren Teil mit einem Wulst (26) zum Halten des zu wiegenden Gegenstandes (12) versehenen Banderolen (10) auf einem eine geneigte Ebene bildenden Träger gezogen wird, die in dem Bereich unterbrochen ist, wo die Wiegeplatte (16) angeordnet ist.

2. Vorrichtung nach Anspruch 1,
   dadurch **gekennzeichnet**,
   daß die Banderolen (10) aus Gewebe gebildet sind.

3. Vorrichtung nach Anspruch 1,
   dadurch **gekennzeichnet**,
   daß die Banderolen (10) aus einem Material gebildet sind, das zur Konfektionierung von dünnen Transportbändern verwendet wird.

4. Vorrichtung nach einem der vorhergehenden Ansprüche,
   dadurch **gekennzeichnet**,
   daß die Zugorgane aus Stangen (24) gebildet sind, die an Ketten (28,28') befestigt sind, die ihre kontinuierliche Mitnahme gewährleisten.

5. Vorrichtung nach einem der vorhergehenden Ansprüche,
   dadurch **gekennzeichnet**,
   daß die Entleerung der gewogenen Gegenstände mit Hilfe von auf der Wegstrecke der Banderolen angeordneten pneumatischen Klappen (30) nach der Wiegevorrichtung (18) derart erfolgt, daß die gewogenen Gegenstände nach Gruppen zu den verschiedenen Ausgängen hin verteilt werden.

6. Vorrichtung nach einem der vorhergehenden Ansprüche,
   dadurch **gekennzeichnet**,
   daß sie eine Automatisierungseinheit enthält, die das von den Kraftaufnehmern des Wiegesystems (18) ausgegebene elektrische Signal empfängt und analysiert, und die ein Schieberegister der Reihenfolge der Öffnungen der Klappen (30) in Abhängigkeit von der Fortbewegung der Folge von Banderolen bildet.

7. Vorrichtung nach einem der vorhergehenden Ansprüche,
   dadurch **gekennzeichnet**,
   daß die obere Oberfläche der Wiegeplatte (16) plan mit der Ebene liegt, entlang der sich die Folge von Banderolen (10) verschiebt.

8. Vorrichtung nach einem der vorhergehenden Ansprüche,
   dadurch **gekennzeichnet**,
   daß die Wiegeplatte (16) mit einem Antifriktionsmaterial, wie Polytetrafluorethylen, beschichtet ist.

9. Vorrichtung nach einem der vorhergehenden Ansprüche,
   dadurch **gekennzeichnet**,
   daß die Wiegeplatte (16) mit einem System versehen ist, das ein Luftkissen erzeugt, auf dem der zu wiegende Gegenstand ruht.

**Claims**

1. Device for the transport and calibration by weight of frangible objects, such as notably fruits and vegetables, of the type comprising a continuous conveyor (14, 28) moving the objects to be weighed, each positioned on a receptacle (10), in order to bring them one by one onto a weighing plate (16) of a weighing system (18) before discharging them (30) to conditioning installations, characterized in that said receptacles are constituted of a succession of sheets (10) made of a material having, on the one hand, good tensile strength and, on the other hand, low resistance to deformation in bending, each sheet (10) equipped in its front part with a pulling member (24) and in its rear part with a beading (26) for holding the object to be weighed (12) being pulled over a support forming an inclined plane which is interrupted in the zone in which said weighing plate (16) is positioned.

2. Device according to Claim 1, characterized in that said sheets (10) are made of cloth.

3. Device according to Claim 1, characterized in that said sheets (10) are made of a material used for the making of thin conveyor belts.

4. Device according to any one of the preceding Claims, characterized in that the pulling members are constituted of bars (24), which are fixed to chains (28, 28') which continually move them.

5. Device according to any one of the preceding Claims, characterized in that the discharge of the weighed objects is carried out by means of pneumatic trap-doors (30), placed on the path of the sheets after the weighing installation (18) in such a manner as to allocate the objects weighed by batches towards the different outlets.

6. Device according to any one of the preceding Claims, characterized in that it comprises a process control unit which receives and analyses the electrical signal supplied by the force pick-ups of the weighing system (18) and which establishes a shift register of the opening instructions for the trap-doors (30) as a function of the advance of the succession of sheets.

7. Device according to any one of the preceding Claims, characterized in that the upper face of the weighing plate (18) is flush with the plane along which the succession of sheets (10) travels.

8. Device according to any one of the preceding Claims, characterized in that the weighing plate (18) is faced with an antifriction material such as polytetrafluorethylene.

9. Device according to any one of the preceding Claims, characterized in that the weighing plate (18) is equipped with a system for creating an air cushion, on which the object to be weighed rests.

FIG.1

FIG. 2